# FASCICULE DE BREVET EUROPEEN

(11) **EP 0 913 016 B1**
(45) Date de publication et mention de la délivrance du brevet: **06.08.2003**
(21) Numéro de dépôt: 98924414.0
(22) Date de dépôt: 11.05.1998
(51) Int. Cl.: H02G 3/08, H02G 3/06

(54) **DISPOSITIF D'ENTREE DE CABLE**
KABELDURCHFÜHRUNG
CABLE INSERTION DEVICE

(30) Priorité: 14.05.1997 FR 9705915; 26.02.1998 FR 9802323
(43) Date de publication de la demande: 06.05.1999
(73) Titulaire: LEGRAND, F-87000 Limoges (FR); LEGRAND SNC, F-87000 Limoges (FR)
(72) Inventeur: CORNU, Hervé, F-76690 Mont Cauvaire (FR)
(74) Mandataire: Santarelli
(86) Numéro de dépôt international: FR9800936
(87) Numéro de publication internationale: WO98052264

(56) Documents cités:
- WO-A-96/28862
- CH-A- 384 654
- DE-A- 3 533 418
- FR-A- 2 402 323

## Description

La présente invention concerne d'une manière générale les dispositifs d'entrée de câble du type de ceux mis en oeuvre pour la traversée étanche d'une quelconque paroi par un quelconque câble, et, par exemple, pour la pénétration à étanchéité d'un tel câble dans une quelconque enceinte, telle que coffret, armoire ou autre enveloppe de ce type.

Elle vise plus particulièrement ceux de ces dispositifs d'entrée de câble qui comportent, d'une part, une embase, qui présente une ouverture propre au passage de câble recherché, et, d'autre part, une portion d'engagement, qui s'étend annulairement autour de l'axe de l'ouverture de l'embase, cette portion d'engagement présentant une paroi extérieure, qui s'étend vers l'avant, et par laquelle elle se raccorde à l'embase, et une paroi intérieure, qui, en rebroussement vers l'arrière par rapport à la paroi extérieure, se raccorde en U à celle-ci.

Un tel dispositif d'entrée de câble se trouve par exemple décrit dans le brevet français qui, déposé le 2 septembre 1977 sous le No 77 26710, a été publié sous le No 2 402 323.

Dans ce brevet français, l'ensemble est réalisé en matière élastiquement déformable.

Si une telle disposition permet effectivement d'obtenir l'étanchéité recherchée, elle ne conduit par contre qu'à une retenue mécanique relativement médiocre pour le câble concerné.

Dans la demande de brevet internationale publiée sous le No WO96/28862, il a été proposé, pour assurer cette retenue mécanique, de mettre en oeuvre des mors.

Mais, dans cette demande de brevet internationale, ces mors interviennent dans une chambre distincte, ce qui conduit à une réalisation relativement complexe pour l'ensemble.

En outre, le dispositif d'entrée de câble correspondant étant réalisé en deux coquilles formant conjointement un ensemble globalement parallélépipédique, seuls deux mors peuvent être prévus, et, pour que la retenue mécanique recherchée soit cependant satisfaisante, ces mors se présentent en pratique sous la forme de taquets autocoinceurs, ce qui complique encore la réalisation de l'ensemble.

Dans la demande de brevet allemand No 35 33 418, il est également prévu des mors, et, en pratique, en nombre supérieur à deux, ceux-ci sont répartis circulairement autour de l'axe de l'ensemble, en étant séparés les uns des autres par des fentes.

Mais ces mors ne concernent que la paroi intérieure de la portion d'engagement.

Ils n'ont donc qu'une longueur réduite.

Ils sont en outre sensiblement rectilignes.

Il en résulte, d'une part, qu'ils interviennent essentiellement par leur rigidité, à la manière des languettes d'une rondelle dont la périphérie interne est fragmentée en de telles languettes, ce qui réduit la gamme de diamètres acceptables sur le câble concerné, et, d'autre part, que, pour leur mise en oeuvre, il faut leur adjoindre des moyens de commande, en l'espèce des doigts venus de l'embase, ce qui conduit à une réalisation assez complexe impliquant que, formée d'une pièce distincte de cette embase, la portion d'engagement soit montée mobile axialement par rapport à cette embase, en pratique par vissage.

En outre, si, dans cette demande de brevet allemand, il est également prévu un organe d'étanchéité, celui-ci se présente sous la forme d'un anneau à resserrer sur le câble concerné, ce qui implique, corollairement, des dispositions à came particulières.

Dans la demande de brevet européen No 0 753 918, dans laquelle la portion d'engagement se réduit à une paroi cylindrique unique, les mors se présentent également sous la forme de languettes relativement rigides, et, même, plus exactement, sous la forme de plaquettes, et ils sont chacun articulés à l'embase par une zone de moindre épaisseur, formant charnière, qui, en pratique, est tangente à une circonférence centrée sur l'axe de l'ouverture de l'embase.

Mais, comme précédemment, ces mors n'ont qu'une longueur réduite et sont sensiblement rectilignes, en sorte que, comme précédemment, également, ils interviennent essentiellement par leur rigidité, au détriment de la gamme de diamètres acceptables pour le câble concerné.

En outre, il faut, pour les ménager, prévoir, à l'intérieur de la portion d'engagement, des nervures, qui, pour leur fournir éventuellement un appui, font saillie radialement, au détriment de la section de passage utile pour cette portion d'engagement.

Enfin, dans cette demande de brevet européen No 0 753 918, aucun organe d'étanchéité n'est prévu.

La présente invention a d'une manière générale pour objet une disposition permettant d'éviter ces inconvénients.

De manière plus précise, elle a pour objet un dispositif d'entrée de câble, qui est du genre comportant une embase, qui présente une ouverture propre à un passage de câble, et une portion d'engagement, qui s'étend annulairement autour de l'axe de l'ouverture de l'embase, cette portion d'engagement présentant une paroi extérieure, qui s'étend vers l'avant, et par laquelle elle se raccorde à l'embase, et une paroi intérieure, qui, en rebroussement vers l'arrière par rapport à la paroi extérieure, se raccorde en U à celle-ci, ce dispositif d'entrée de câble étant caractérisé d'une manière générale en ce que, conjointement, la portion d'engagement est fractionnée circulairement en mors élastiquement déformables par des fentes qui s'étendent jusqu'à l'embase, en ce que, à leur raccordement à l'embase, les mors s'encastrent chacun dans celle-ci suivant une zone d'enracinement tangente à une circonférence centrée sur l'axe de l'ouverture de l'embase, et en ce que, à cette portion d'engagement, qui est en matériau relativement rigide, il est associé un organe d'étanchéité, qui s'étend globalement transversalement par rapport à l'axe de l'ouverture de l'embase, en occultant au moins partiellement cette ouverture, et qui est, lui, en matériau relativement souple.

Grâce à leur forme et à leur extension, aussi bien que grâce à leur mode de raccordement à l'embase dont ils sont issus, les mors du dispositif d'entrée de câble suivant l'invention travaillent essentiellement à la flexion lorsqu'un câble est engagé entre eux.

Ils permettent ainsi de se satisfaire d'une gamme étendue de diamètres possibles pour le câble concerné, tout en en assurant une retenue mécanique efficace de celui-ci.

Plus généralement, la disposition, suivant l'invention, qui se prête à de nombreuses formes de réalisation, permet avantageusement de concilier une bonne retenue mécanique du câble et une bonne étanchéité autour de celui-ci.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un dispositif d'entrée de câble suivant l'invention ;
la figure 2 en est une vue en perspective éclatée ;
la figure 3 est, suivant la flèche III de la figure 2, une vue en élévation de sa pièce avant ;
la figure 4 reprend, à échelle supérieure, le détail de la figure 3 repéré par un encart IV sur cette figure 3 ;
la figure 5 est, à échelle différente, une vue en coupe transversale de cette pièce avant, suivant la ligne V-V de la figure 3 ;
la figure 6 est, suivant la flèche VI de la figure 2, une vue en élévation de la pièce arrière du dispositif d'entrée de câble concerné ;
la figure 7 est, à échelle supérieure, une vue en coupe transversale de cette pièce arrière, suivant la ligne VII-VII de la figure 6 ;
la figure 8 est une vue en perspective qui, dérivée de celle de la figure 1, illustre la mise en oeuvre du dispositif d'entrée de câble suivant l'invention ;
la figure 9 est, à échelle supérieure, une vue en coupe transversale de l'ensemble, suivant la ligne IX-IX de la figure 8 ;
les figures 10A, 10B 10C sont des vues schématiques, en coupe transversale, qui illustrent le mode de travail des mors du dispositif d'entrée de câble suivant l'invention ;
la figure 11 est une vue en perspective analogue à celle de la figure 1, pour une variante de réalisation du dispositif d'entrée de câble suivant l'invention ;
la figure 12 est une vue en coupe axiale de cette variante de réalisation, suivant la ligne XII-XII de la figure 11 ;
la figure 13 en est une vue en perspective éclatée ;
la figure 14 est, avec un arrachement local, une vue en plan de la pièce avant de cette variante de réalisation, suivant la flèche XIV de la figure 13 ;
la figure 15 est une vue en perspective de la pièce arrière de cette variante de réalisation, représentée isolément ;
la figure 16 est une vue en élévation de cette pièce arrière, suivant la flèche XVI de la figure 15 ;
la figure 17 en est une vue de dessus, suivant la flèche XVII de la figure 16 ;
la figure 18 est, pour cette variante de réalisation, une vue en coupe transversale analogue à celle de la figure 9, mais suivant une disposition axiale inverse de celle de cette dernière ;
la figure 19 est une vue en coupe transversale, qui, analogue à celle de la figure 12, illustre un développement de cette variante de réalisation ;
la figure 20 est une vue en élévation qui, analogue à celle de la figure 16, se rapporte à ce développement ;
la figure 21 est une vue en coupe transversale qui, analogue à celle de la figure 12, se rapporte à une autre variante de réalisation du dispositif d'entrée de câble suivant l'invention ;
la figure 22 est une vue en perspective d'une entité comportant plusieurs dispositifs d'entrée de câble suivant l'invention, vue de l'avant ;
la figure 23 est une vue en perspective, en partie éclatée, de cette entité, vue de l'arrière ;
la figure 24 est une vue en coupe transversale qui, analogue à celle de la figure 12, se rapporte à une autre variante de réalisation du dispositif d'entrée de câble suivant l'invention ;
la figure 25 est une vue en coupe transversale éclatée de cette dernière variante de réalisation.

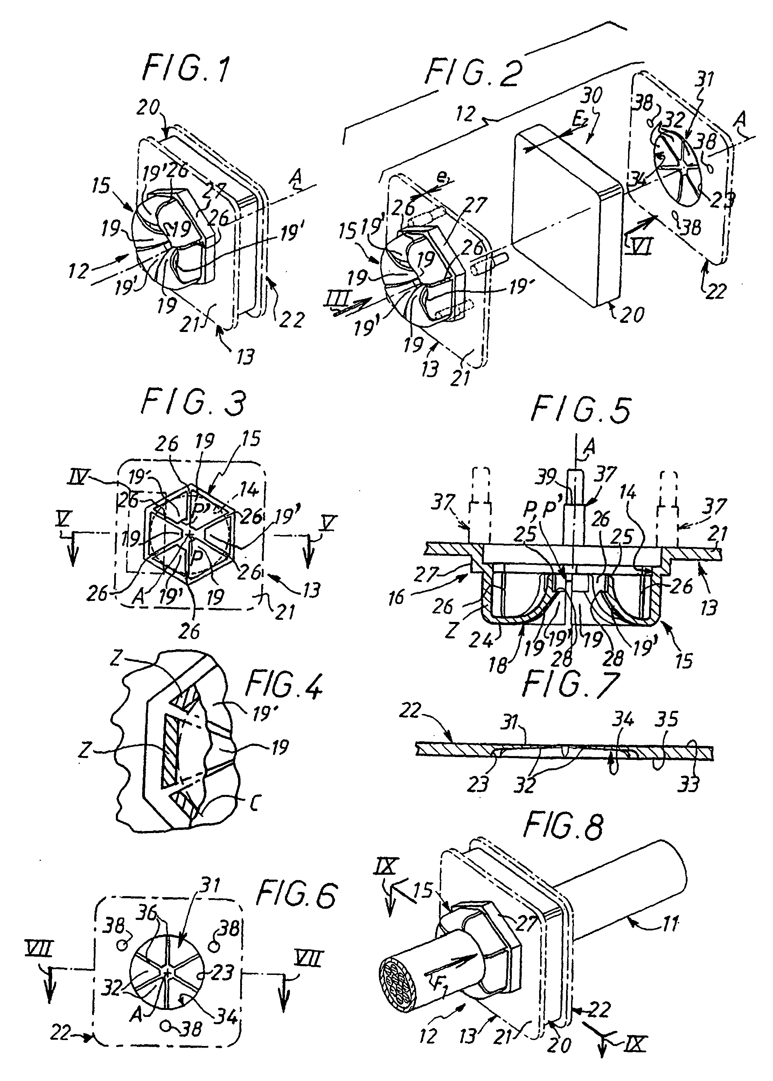

Tel que schématisé sur les figures 8, 9 et 18, il s'agit, globalement, d'assurer la traversée étanche d'une quelconque paroi, non représentée sur ces figures, par au moins un câble 11, qui, en pratique, est un câble électrique.

De manière connue en soi, il est mis en oeuvre, pour ce faire, un dispositif d'entrée de câble 12.

De manière également connue en soi, ce dispositif d'entrée de câble 12 comporte, globalement, d'une part, une embase 13, qui présente une ouverture 14 propre à un passage de câble, et, d'autre part, une portion d'engagement 15, qui s'étend annulairement autour de l'axe A de l'ouverture 14 de l'embase 13.

En pratique, l'ouverture 14 a un contour circulaire, et son diamètre est largement supérieur à celui du câble 11 à engager.

L'axe A de cette ouverture 14 est schématisé en traits interrompus sur les figures 1, 2 et 4, et il est représenté par sa trace sur les figures 3 et 6.

De manière connue en soi, la portion d'engagement 15 présente, d'une part, une paroi extérieure 16, qui s'étend vers l'avant, et par laquelle elle se raccorde à l'embase 13, en s'étendant en pratique à la manière d'un cylindre droit à compter du bord de l'ouverture 14 de cette embase 13, et, d'autre part, une paroi intérieure 18, qui, en rebroussement vers l'arrière par rapport à la paroi extérieure 16, se raccorde en U à celle-ci.

Suivant l'invention, la portion d'engagement 15 est fractionnée circulairement en mors 19, 19' élastiquement déformables, suivant des modalités décrites plus en détail ultérieurement, et, à cette portion d'engagement 15, qui est en matériau relativement rigide, il est associé un organe d'étanchéité 20, qui s'étend globalement transversalement par rapport à l'axe A de l'ouverture 14 de l'embase 13, en occultant au moins partiellement cette ouverture 14, et qui est, lui, en matériau relativement souple.

Par matériau relativement rigide, on entend, simplement, ici, d'une manière très générale, pour la portion d'engagement 15, un matériau qui est plus rigide que le matériau constitutif de l'organe d'étanchéité 20.

Autrement dit, la rigidité de la portion d'engagement 15, d'une part, et la souplesse de l'organe d'étanchéité 20, d'autre part, sont simplement ici appréciées de manière relative l'une par rapport à l'autre.

Dans l'ensemble des formes de réalisation représentées, l'organe d'étanchéité 20 s'étend en arrière de la portion d'engagement 15.

Plus précisément, dans ces formes de réalisation, le dispositif d'entrée de câble 12 suivant l'invention comporte une pièce arrière 22, qui, solidaire de l'embase 13, est distincte de celle-ci et comporte une ouverture 23 coaxiale de l'ouverture 14 de cette embase 13, et l'organe d'étanchéité 20 intervient au moins pour partie entre la portion d'engagement 15 et cette pièce arrière 22.

Dans la forme de réalisation plus particulièrement représentée sur les figures 1 à 9, l'embase 13 comporte une platine 21 et la pièce arrière 22 forme une contre-plaque qui s'étend sensiblement parallèlement à cette platine 21.

La platine 21 et la pièce arrière 22 ont une extension indéterminée, et l'une d'entre elles pourrait d'ailleurs appartenir en continu à la paroi à traverser.

C'est la raison pour laquelle, sur les figures 1, 2, 3, 6 et 8, leurs contours n'ont été que schématisés en traits interrompus.

Par mesure de commodité, ces contours ont par ailleurs été supposés être carrés, avec des angles arrondis.

Mais ils pourraient tout aussi bien avoir une autre configuration.

Conjointement, dans cette forme de réalisation, l'organe d'étanchéité 20 forme, lui aussi, une pièce distincte, et il intervient entre la platine 21 de l'embase 13 et la contre-plaque que forme la pièce arrière 22.

Préférentiellement, et cela est le cas dans l'ensemble des formes de réalisation représentées, la portion d'engagement 15 fait au moins en partie saillie vers l'avant sur l'embase 13.

Dans la forme de réalisation plus particulièrement représentée sur les figures 1 à 9, la portion d'engagement 15 fait dans sa totalité saillie vers l'avant sur l'embase 13, et, plus précisément, sur la platine 21 que comporte celle-ci.

Par exemple, et tel que représenté, la portion d'engagement 15 est d'un seul tenant avec l'embase 13, en formant par moulage une seule et même pièce avec celle-ci.

L'ensemble est par exemple réalisé dans l'une quelconque des matières suivantes : PA (polyamide) 6.6, PC (polycarbonate), PVC (polychlorure de vinyle) rigide, ABS (acrylonitrine butadiène styrène), PP (polypropylène), ou dans un mélange de telles matières, et, par exemple, dans un mélange de PC et d'ABS.

Quoi qu'il en soit, l'embase 13 et la portion d'engagement 15 forment, conjointement, dans cette forme de réalisation, la pièce avant du dispositif d'entrée de câble 12.

Corollairement, dans cette forme de réalisation, l'organe d'étanchéité 20 est préférentiellement en matière élastiquement déformable.

Préférentiellement, et cela est le cas dans l'ensemble des formes de réalisation représentées, la portion d'engagement 15 comporte au moins un mors 19 d'un premier type, dit ici par simple commodité mors 19 long, dont l'extrémité enveloppe au repos un passage P relativement étroit, et au moins un mors 19' d'un deuxième type, dit ici par simple commodité mors 19' court, dont l'extrémité enveloppe au repos un passage P' relativement large.

Par exemple, et tel que représenté, la portion d'engagement 15 comporte en alternance des mors 19 longs et des mors 19' courts.

Dans les diverses formes de réalisation représentées, il y a ainsi, en alternance, trois mors 19 longs et trois mors 19' courts.

Tous ces mors 19, 19' ont en plan un contour globalement triangulaire, qui va en convergeant en direction de l'axe A de l'ouverture 14 de l'embase 13, et qui, pour la définition du passage P, P' correspondant, s'arrête en arc de cercle à distance de cet axe A.

A l'image de l'ouverture 14 de l'embase 13, dont ils sont concentriques, les passages P, P' ont donc des contours circulaires, mais leurs diamètres sont inférieurs à celui de cette ouverture 14, le diamètre du passage P étant lui-même inférieur au diamètre du passage P'.

Dans la forme de réalisation plus particulièrement représentée sur les figures 1 à 9, les mors 19, 19' sont quasi adjacents les uns avec les autres tout au long de leurs bords latéraux, et ces derniers sont sensiblement rectilignes.

En section axiale, les mors 19, 19' ont, globalement, un profil en U.

Plus précisément, ils présentent, en section axiale, un profil arrondi le long de la paroi intérieure 18 de la portion d'engagement 15 et un profil sensiblement rectiligne le long de la paroi extérieure 16 de celle-ci, avec, pour les mors 19 longs, au raccordement entre cette paroi intérieure 18 et cette paroi extérieure 16, un méplat 24 qui s'étend sensiblement perpendiculairement à l'axe A de l'ouverture 14 de l'embase 13.

Dans les diverses formes de réalisation représentées, les mors 19, 19' définissent le passage P, P' correspondant par un tronçon d'extrémité 25 qui, préférentiellement, s'étend, au repos, sensiblement parallèlement à l'axe A de l'ouverture 14 de l'embase 13.

Suivant l'invention, la portion d'engagement 15 est fractionnée circulairement en mors 19, 19' par des fentes 26, qui, allongées radialement, en étoile, autour de l'axe A de l'ouverture 14 de l'embase 13, s'étendent jusqu'à l'embase 13 et affectent donc tant la paroi intérieure 18 de cette portion d'engagement 15, que la paroi extérieure 16 de celle-ci, en courant sur toute la hauteur de cette dernière.

Suivant l'invention, également, à leur raccordement à l'embase 13, les mors 19, 19' s'encastrent chacun dans celle-ci, suivant une zone d'enracinement Z tangente à une circonférence C centrée sur l'axe A de l'ouverture 14 de l'embase 13.

Dans les formes de réalisation représentées, cette circonférence C est la même pour l'ensemble des mors 19, 19'.

Dans la forme de réalisation plus particulièrement représentée sur les figures 1 à 9, une collerette 27 s'étend au raccordement de la paroi extérieure 16 de la portion d'engagement 15 avec l'embase 13, et les fentes 26 s'étendent jusqu'à cette collerette 27.

Par exemple, et tel que représenté, cette collerette 27 forme, périphériquement, par sa tranche, un six pans.

Préférentiellement, et cela est le cas dans l'ensemble des formes de réalisation représentées, les mors 19, 19' que forme la paroi d'engagement 15 présentent, transversalement, en saillie sur leur surface extérieure, en direction de l'axe A de l'ouverture 14 de l'embase 13, au moins un cran 28.

Dans la forme de réalisation plus particulièrement représentée sur les figures 1 à 9, seul un tel cran 28 est prévu, et, disposé à la racine du tronçon d'extrémité 25 des mors 19, 19', il s'étend sensiblement perpendiculairement à l'axe A de l'ouverture 14 de l'embase 13.

Par ailleurs, dans cette forme de réalisation, l'organe d'étanchéité 20 appartient localement à une plaque 30 prise en sandwich entre la platine 21 de l'embase 13 et la pièce arrière 22.

Préférentiellement, et tel que représenté, l'épaisseur E de cette plaque 30 est un multiple n de celle e de la platine 21 de l'embase 13, figure 2.

Par exemple, n est au moins égal à trois.

Par exemple, l'organe d'étanchéité 20 peut, au moins initialement, être continu, c'est-à-dire plein, en étant alors dépourvu de tout perçage et même de tout préperçage.

Il occulte alors entièrement l'ouverture 14 de l'embase 13.

Il faut donc le perforer à force, lors de l'engagement du câble 11, par exemple à l'aide d'un tournevis ou d'un quelconque autre accessoire.

Par exemple, la plaque 30 à laquelle appartient cet organe d'étanchéité 20 est en caoutchouc mousse.

En outre, dans cette forme de réalisation, la contre-plaque que forme la pièce arrière 22 s'étend globalement parallèlement à la platine 21 de l'embase 13.

Comme la portion d'engagement 15, elle est en matériau relativement rigide.

Par exemple, son matériau constitutif est le même que celui de cette portion d'engagement 15.

Dans l'ensemble des formes de réalisation représentées, la pièce arrière 22 comporte un voile 31, qui occulte au moins partiellement son ouverture 23, et qui est fragmenté circulairement en mors 32 élastiquement déformables.

Dans la forme de réalisation plus particulièrement représentée sur les figures 1 à 9, le voile 31 de la pièce arrière 22 a une épaisseur inférieure à celle de la contre-plaque que la pièce arrière 22 forme autour de lui, cette épaisseur étant elle-même sensiblement égale à l'épaisseur e de la platine 21 de l'embase 13.

Par exemple, et tel que représenté, le voile 31 de la pièce arrière 22 est, extérieurement, à niveau avec la surface extérieure 33 de la contre-plaque que la pièce arrière 22 forme autour de lui, figure 6, et il intervient au fond d'un dégagement 34 présent en creux sur la surface intérieure 35 de celle-ci.

Comme les mors 19, 19' de la portion d'engagement 15, les mors 32 de la pièce arrière 22 ont, en plan, un contour triangulaire, qui va en convergeant en direction de l'axe A de l'ouverture 14 de l'embase 13, et qui s'arrête en arc de cercle à distance de cet axe A.

Dans les formes de réalisation représentées, six mors 32 sont prévus, et ils ont tous une même extension.

Mais, comme précédemment, il peut y avoir des mors 32 longs et des mors 32 courts.

En pratique, les mors 32 que forme le voile 31 de la pièce arrière 22 sont séparés les uns des autres par des fentes 36, allongées radialement, en étoile, autour de l'axe A de l'ouverture 14 de l'embase 13.

Dans les formes de réalisation représentées, ces mors 32 vont en s'amincissant de leur racine à leur extrémité libre.

Par exemple, et cela est le cas dans la forme de réalisation plus particulièrement représentée sur les figures 1 à 8, les mors 32 de la pièce arrière 22 sont chacun respectivement en regard des mors 19, 19' de la portion d'engagement 15.

Mais, en variante, ils peuvent être décalés circulairement par rapport à ceux-ci.

Par ailleurs, dans cette forme de réalisation, la pièce arrière 22 est solidarisée par sertissage à la platine 21 de l'embase 13.

Par exemple, et tel que représenté, cette platine 21 porte, en saillie, une pluralité de plots de sertissage 37, qui sont répartis circulairement autour de l'axe A de l'ouverture 14 de l'embase 13, et qui, après traversée de l'organe d'étanchéité 20, traversent la pièce arrière 22 à la faveur de perçages 38 prévus en correspondance à cet effet dans celle-ci.

Préférentiellement, et cela est le cas dans la forme de réalisation représentée, ces plots de sertissage 37 présentent, transversalement, un épaulement 39, pour assurer une butée à la pièce arrière 22 et ainsi former entretoise.

Ils sont ensuite simplement sertis à chaud au-delà de la pièce arrière 22.

L'engagement du câble 11 se fait de l'avant, suivant la flèche F1 des figures 7 et 8.

Lors de cet engagement, les mors 19, 19' de la portion d'engagement 15 sont refoulés radialement, en direction opposée à l'axe A de l'ouverture 14 de l'embase 13.

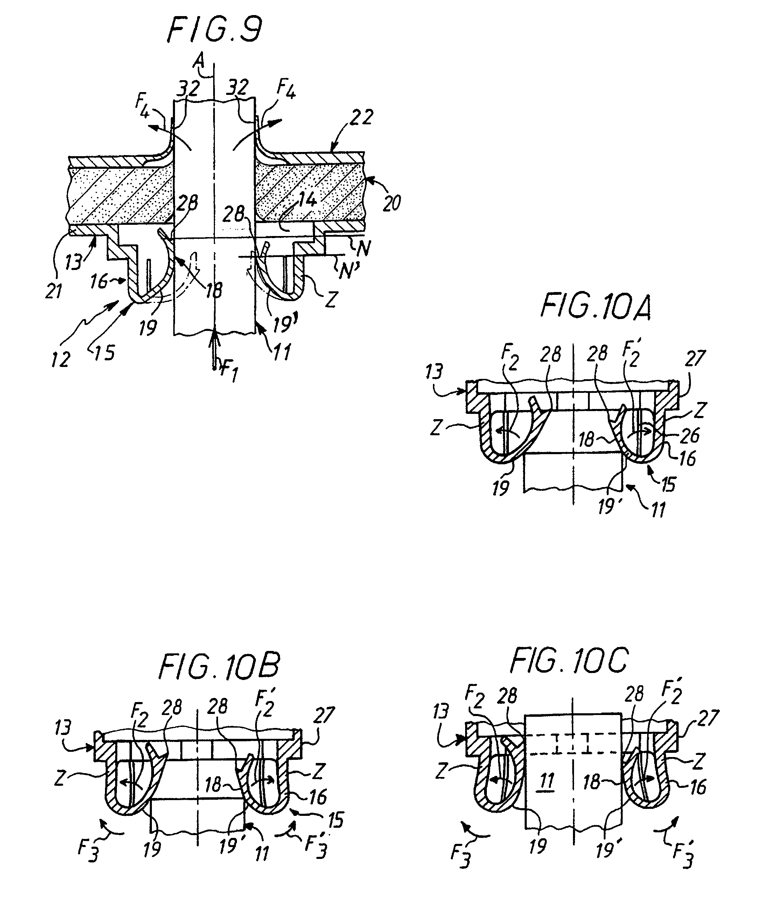

Dans un premier temps, figure 10A, il y a, par élasticité, une simple flexion de la branche intérieure des mors 19, 19' correspondant à la paroi intérieure 18 de la portion d'engagement 15, par simple rotation par rapport à la paroi extérieure 16 de cette portion d'engagement 15, tel que schématisé par des flèches F2, F'2 sur cette figure 10A.

L'insertion du câble 11 étant poursuivie, figure 10B, il s'ajoute, par élasticité, à cette rotation, un début de flexion, vers l'extérieur, de la branche extérieure des mors 19, 19' correspondant à la paroi extérieure 16 de la portion d'engagement 15, tel que schématisé par des flèches F3, F'3 sur cette figure 10B, tout se passant comme si, du fait de son enracinement à l'embase 13, cette branche extérieure des mors 19, 19' intervenait à la manière d'une poutre encastrée.

Puis, figure 10B, cette flexion de la branche extérieure des mors 19, 19' s'accentue, jusqu'à l'état final représenté sur cette figure 10B.

Ainsi, globalement, les mors 19, 19' interviennent élastiquement sur la totalité de leur longueur, tant par un rapprochement l'une de l'autre de leurs deux branches que par une flexion de leur branche extérieure.

L'organe d'étanchéité 20 est, lui, traversé à force, et les mors 32 de la pièce arrière 22 sont eux-mêmes refoulés vers l'arrière, suivant les flèches F4 de la figure 9.

La retenue mécanique du câble 11 est assurée par frottement, pour l'essentiel par les mors 19, 19' de la portion d'engagement 15, mais, également, par l'organe d'étanchéité 20 et par les mors 32 de la pièce arrière 22.

Du fait de leurs longueurs différentes, les mors 19, 19' de la portion d'engagement 15 interviennent avantageusement, par leurs crans 28, à deux niveaux différents, à savoir, tel que schématisé sur la figure 9, à un niveau N relativement proche de la platine 21 de l'embase 13 pour les mors 19 longs, et un niveau N' relativement éloigné de cette platine 21 pour les mors 19' courts.

La retenue mécanique recherchée s'en trouve renforcée.

Corollairement, l'étanchéité est assurée par l'organe d'étanchéité 20, cet organe d'étanchéité 20 enserrant le câble 11 de manière continue tout autour du pourtour de ce câble 11.

Ainsi qu'il est aisé de le comprendre, la pièce arrière 22 assure avantageusement un maintien de cet organe d'étanchéité 20, en confinant celui-ci, et en lui évitant d'éclater lors de sa perforation.

Elle contribue en outre avantageusement au guidage du câble 11, en le maintenant perpendiculaire à la platine 21 de l'embase 13, et elle confirme sa retenue mécanique.

Du fait de la capacité de déformation élastique de l'ensemble, le dispositif d'entrée de câble 12 suivant l'invention peut par ailleurs avantageusement convenir à toute une gamme de câbles 11 de diamètres différents.

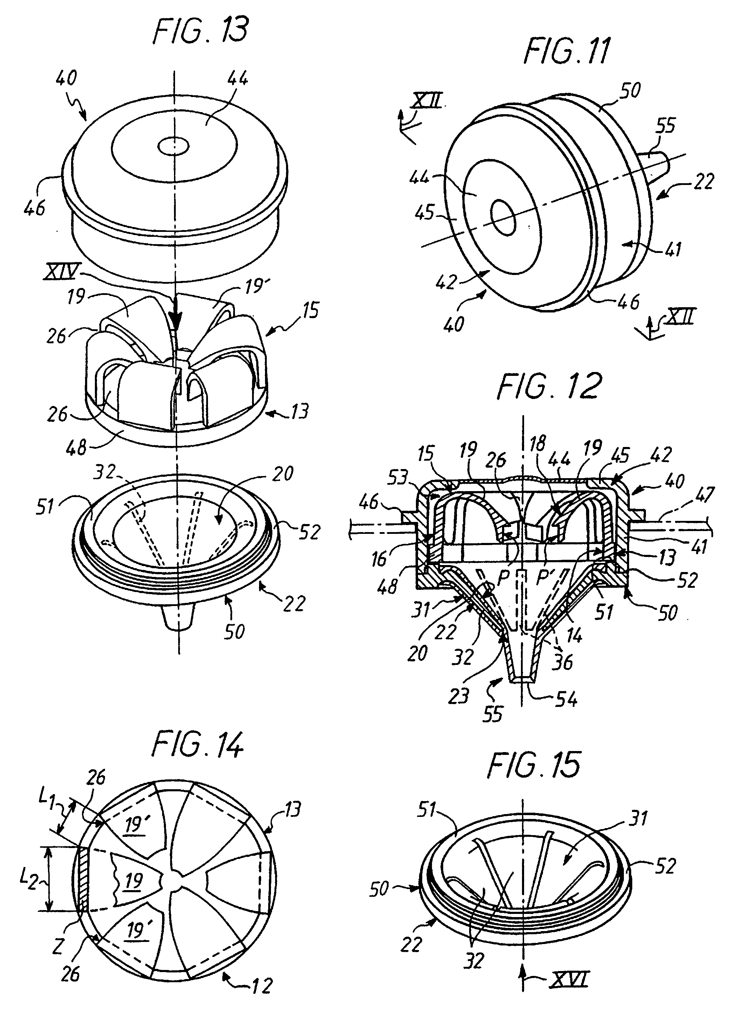

Dans les variantes de réalisation représentées sur les figures 11 à 25, le dispositif d'entrée de câble 12 suivant l'invention comporte une coiffe 40, qui recouvre sa portion d'engagement 15.

Cette coiffe 40 comporte une paroi latérale 41, par laquelle elle entoure la paroi extérieure 16 de la portion d'engagement 15, et une paroi de façade 42, qui s'étend en avant de cette portion d'engagement 15.

La paroi latérale 41, au moins, est en matériau relativement rigide, tandis que la paroi de façade 42 comporte un opercule défonçable 44, qui s'étend sur une partie au moins de sa surface, et qui, lui, est en matériau relativement souple.

Par exemple, la paroi latérale 41 est réalisée dans le même matériau que la portion d'engagement 15 et que la pièce arrière 22, et l'opercule défonçable 44 est, lui, en élastomère.

Dans la forme de réalisation représentée, la paroi de façade 42 comporte, à sa périphérie, en continuité avec la paroi latérale 41, une rondelle 45, qui, d'un seul tenant avec cette paroi latérale 41, forme une seule et même pièce avec celle-ci.

L'opercule défonçable 44 ne s'étend donc dans ce cas que sur une partie de la surface de cette paroi de façade 42, en l'espèce sa partie centrale.

Dans les formes de réalisation représentées, la paroi latérale 41 de la coiffe 40 comporte, annulairement, à mi-hauteur, en saillie sur sa surface extérieure, une nervure 46, destinée à intervenir à la manière d'une garde, pour l'appui de l'ensemble sur une quelconque paroi 47 à équiper, tel que schématisé en traits interrompus sur la figure 10, en portant alors soit sur la surface externe de cette paroi 47, comme représenté, soit sur sa surface interne.

Dans les formes de réalisation représentées sur les figures 11 à 25, l'embase 13 se réduit, corollairement, à une virole 48, et la pièce arrière 22 comporte elle-même une virole 50, qui, par un épaulement 51, contrebute l'embase 13 ainsi constituée d'une telle virole 48.

Conjointement, dans ces formes de réalisation, la coiffe 40 et la pièce arrière 22 sont solidarisées l'une à l'autre.

Par exemple, et tel que représenté, la virole 50 de la pièce arrière 22 comporte, autour de son épaulement 51, mais en retrait par rapport à celui-ci, un épaulement 52 sur lequel la coiffe 40 porte par la tranche de sa paroi latérale 41, et la coiffe 40 est solidarisée à la pièce arrière 22 à ce niveau, par soudage ou analogue, par exemple par soudage aux ultrasons.

Quoi qu'il en soit, dans les formes de réalisation représentées sur les figures 11 à 25, la coiffe 40 et la pièce arrière 22 délimitent conjointement une enceinte 53 dans laquelle la portion d'engagement 15 et l'embase 13 dont celle-ci est solidaire se trouvent emprisonnées.

Par exemple, et tel que représenté, la virole 48 de l'embase 13 porte par sa surface extérieure contre la surface intérieure de la paroi latérale 41 de la coiffe 40.

De même, la portion d'engagement 15 peut si désiré porter par sa zone sommitale sur la rondelle 45 de la paroi de façade 42 de cette coiffe 40.

Dans les formes de réalisation représentées sur les figures 11 à 25, les fentes 26 séparant les mors 19, 19' sont, au niveau de l'embase 13, sensiblement élargies, pour faciliter le débattement de ces mors 19, 19'.

Par exemple, et tel que représenté, elles ont, au niveau de l'embase 13, une largeur L1 supérieure au tiers de la largeur L2 des mors 19, 19' à ce même niveau.

Corollairement, dans ces formes de réalisation, les bords latéraux de la branche intérieure des mors 19, 19' sont globalement arrondis.

Dans les formes de réalisation représentées sur les figures 11 à 25, l'organe d'étanchéité 20 est surmoulé à une partie au moins de la pièce arrière 22.

Par exemple, et tel que représenté, il est surmoulé au voile 31 de cette pièce arrière 22.

Dans la forme de réalisation plus particulièrement représentée sur les figures 9 à 16, l'organe d'étanchéité 20 s'étend de part et d'autre du voile 31 de la pièce arrière 22, en enrobant totalement les mors 32 de ce voile 31.

Autrement dit, il s'étend tant sur la face avant de ce voile 31, c'est-à-dire sur la face de celui-ci tournée vers la portion d'engagement 15, que sur la face arrière de ce voile 31, c'est-à-dire sur la face de celui-ci tournée du côté opposé à la portion d'engagement 15.

Par ailleurs, dans les formes de réalisation représentées sur les figures 11 à 23, l'organe d'étanchéité 20 comporte une ouverture 54 coaxiale de l'ouverture 14 de l'embase 13.

Enfin, dans ces formes de réalisation, le voile 31 de la pièce arrière 22 est globalement tronconique, avec sa concavité tournée vers la portion d'engagement 15.

Préférentiellement, et cela est le cas dans les formes de réalisation représentées, l'organe d'étanchéité 20 forme, au-delà de l'extrémité libre des mors 32 du voile 31 de la pièce arrière 22, un tube 55, qui s'étend axialement en direction opposée à la portion d'engagement 15, et au bout duquel intervient l'ouverture 54 de cet organe d'étanchéité 20.

Préférentiellement, également, et cela est également le cas dans les formes de réalisation représentées, le tube 55 que forme ainsi l'organe d'étanchéité 20 est tronconique, avec une conicité inférieure à celle du voile 31 de la pièce arrière 22.

Autrement dit, le demi-angle au sommet du tronc de cône que forme le tube 55 de l'organe d'étanchéité 20 est inférieur au demi-angle au sommet du tronc de cône que forme le voile 31 de la pièce arrière 22.

Par exemple, l'organe d'étanchéité 20 est en élastomère.

Pour le reste, les dispositions sont du même type que les précédentes.

La mise en oeuvre, illustrée sur la figure 15, se fait également de la même façon que précédemment, par engagement à force du câble 11 à travers l'opercule défonçable 44 de la coiffe 40.

Si désiré, pour faciliter cet engagement, une pastille peut être prédécoupée dans la zone centrale de cet opercule défonçable 44.

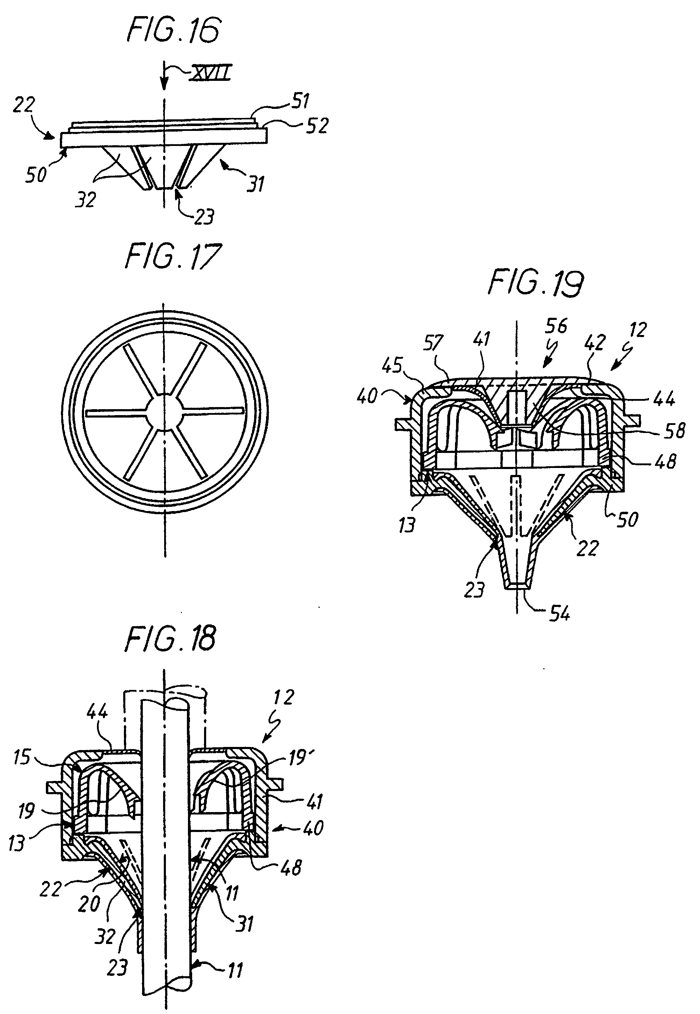

Comme précédemment, et tel que schématisé en traits interrompus sur la figure 18, le dispositif d'entrée de câble 12 suivant l'invention convient avantageusement à des câbles 11 de diamètres différents.

Ainsi qu'il est aisé de le comprendre, la coiffe 40 empêche, avantageusement, dans tous les cas, par sa paroi latérale 41, un écartement excessif des mors 19, 19' de la portion d'engagement 15.

Elle conduit donc avantageusement à une retenue mécanique plus efficace du câble 11.

En outre, et surtout, elle s'oppose avantageusement à toute pénétration intempestive d'eau dans la portion d'engagement 15, en évitant ainsi une éventuelle accumulation d'eau en amont de l'organe d'étanchéité 20, au bénéfice de l'étanchéité recherchée.

Préférentiellement, l'élastomère mis en oeuvre pour la constitution de l'opercule défonçable 44 est translucide, voire transparent, pour permettre une visualisation du volume interne du dispositif d'entrée de câble 12 suivant l'invention.

Ainsi qu'il est également aisé de le comprendre, la pièce arrière 22 constitue, avantageusement, par les mors 32 de son voile 31, une armature pour l'organe d'étanchéité 20, au bénéfice de la résistance mécanique de celui-ci.

Conjointement, intervenant à la surface de cette pièce arrière 22, l'organe d'étanchéité 20 facilite avantageusement le glissement du câble 11 le long de celle-ci, et assure toute l'étanchéité requise autour de ce câble 11.

Si désiré, il peut être prévu un outil, en forme de canule, non représenté, pour faciliter un retrait éventuel du câble 11.

Si désiré, également, et tel que représenté sur la figure 19, il peut être prévu un bouchon 56 pour reboucher de manière étanche le dispositif d'entrée de câble 12 après une telle première utilisation de celui-ci, en obturant l'opercule défonçable 44, alors défoncé, de la coiffe 40 de ce dispositif d'entrée de câble 12.

Par exemple, et tel que représenté, ce bouchon 56 comporte une platine 57, par laquelle il vient porter sur la rondelle 45 de la paroi de façade 42 de la coiffe 40, et, en saillie sur la surface interne de cette platine 57, un bossage 58, qui est globalement tronconique, et par lequel il vient pénétrer dans l'opercule défonçable 44, en refoulant progressivement radialement celui-ci.

Si désiré, et tel que représenté sur la figure 17, le bouchon 56 peut être moulé conjointement avec la pièce arrière 22.

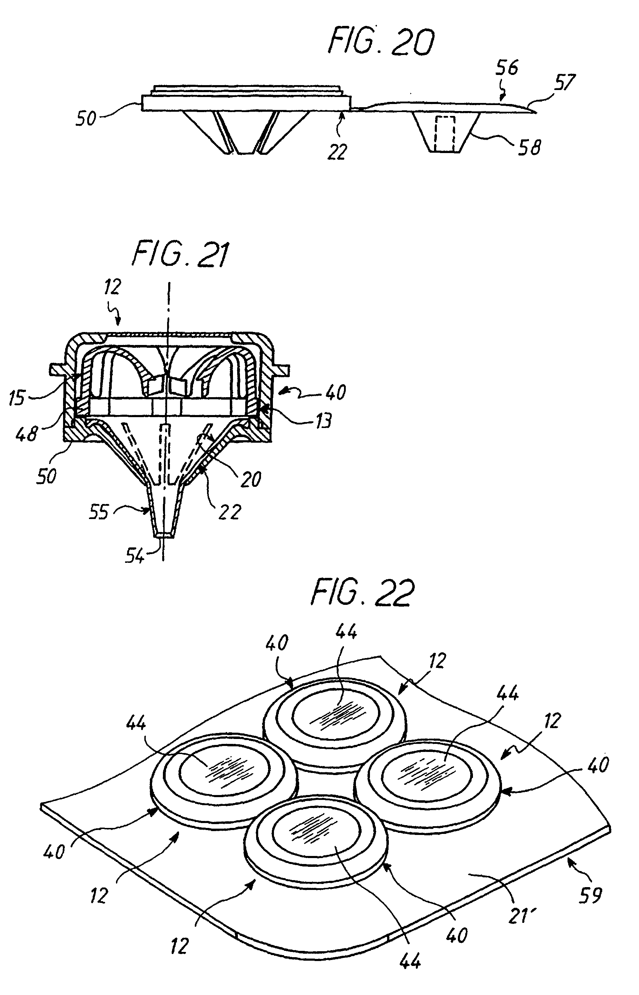

Dans la forme de réalisation représentée sur la figure 21, l'organe d'étanchéité 20 ne s'étend que sur la face avant de la pièce arrière 22.

Dans une forme de réalisation non représentée, l'organe d'étanchéité 20 peut cependant tout aussi bien ne s'étendre que sur la face arrière de la pièce arrière 22.

Dans l'un et l'autre cas, les dispositions sont, pour le reste, du même type que les précédentes.

Dans ce qui précède, le dispositif d'entrée de câble 12 suivant l'invention a été supposé intervenir isolément, pour le passage d'un seul câble 11.

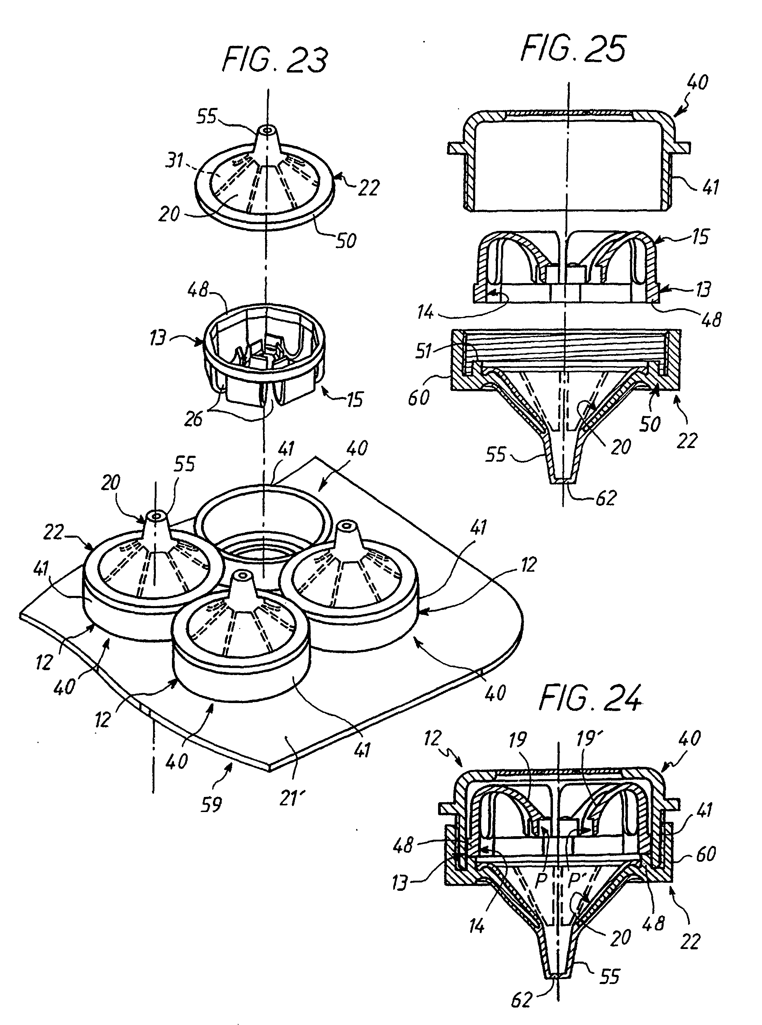

Dans la forme de réalisation représentée sur les figures 22 et 23, il est au contraire associé à au moins un autre dispositif d'entrée de câble 12 de même type, pour le passage d'un autre câble 11, non représenté, en ayant en commun avec cet autre dispositif d'entrée de câble 12 une même platine 21, 21'.

Par exemple, et tel que représenté, il est associé à plusieurs autres dispositifs d'entrée de câble 12, pour le passage d'autant de câbles 11.

Sur ces figures, les dispositifs d'entrée de câble 12 sont tous identiques entre eux, et il s'agit de dispositifs d'entrée de câble du type de ceux décrits en référence aux figures 11 à 21.

La platine 21' qui leur est commune vient en substitution de la nervure 46 de leur coiffe 40.

Autrement dit, leur coiffe 40 est d'un seul tenant avec la platine 21' qu'ils ont en commun avec au moins un autre, en formant une seule et même pièce avec cette platine 21'.

Tel que représenté à la figure 23, il suffit, ensuite, d'empiler, successivement, dans chacune des coiffes 40, d'abord l'ensemble que constitue une portion d'engagement 15 avec l'embase 13 dont elle est solidaire, puis l'ensemble que constitue la pièce arrière 22 avec l'organe d'étanchéité 20 qui enrobe son voile 31, et de solidariser, ensuite, par soudage, la pièce arrière 22 à la coiffe 40, comme décrit ci-dessus.

Par exemple, et tel que représenté, les divers dispositifs d'entrée de câble 12 ainsi associés sont disposés en rangées, en étant éventuellement en quinconce d'une rangée à l'autre.

Avec la platine 21' qui leur est commune, ils constituent une entité 59, qui, si désiré, peut avantageusement être rapportée en tant que telle sur une quelconque paroi munie d'une ouverture correspondante, en étant par exemple fixée à cette paroi par soudage, par encliquetage ou par mise en oeuvre de vis, et avec l'insertion éventuelle d'un joint d'étanchéité autour de l'ouverture de cette paroi.

En variante, les dispositifs d'entrée de câble 12 d'une telle entité 59 peuvent être du type de celui décrit en référence aux figures 1 à 9.

Dans la variante de réalisation représentée sur les figures 21 et 22, le dispositif d'entrée de câble 12 suivant l'invention intervient isolément, à la manière d'un presse-étoupe.

Par exemple, ce dispositif d'entrée de câble 12 est globalement du type de ceux décrits en référence aux figures 11 à 21.

Mais sa coiffe 40 est solidarisée par vissage à la pièce arrière 22.

Par exemple, et tel que représenté, cette pièce arrière 22 comporte, au-delà de sa virole 50, un manchon 60, qui est coaxial de cette virole 50, et dont la surface interne est taraudée.

Conjointement, la surface externe de la paroi latérale 41 de la coiffe 40 est filetée au-delà de sa nervure 46.

Par ailleurs, dans cette forme de réalisation, l'organe d'étanchéité 20 occulte totalement l'ouverture 14 de l'embase 13, le tube 55 que forme cet organe d'étanchéité 20 étant fermé par un opercule 62 à son extrémité.

Bien entendu, la présente invention ne se limite pas aux formes de réalisation décrites et représentées, mais englobe toute variante d'exécution et/ou de combinaison de leurs divers éléments, notamment en ce qui concerne le nombre, et/ou la répartition, et/ou la configuration des mors que comporte la portion d'engagement.

## Revendications

1. Dispositif d'entrée de câble du genre comportant une embase (13), qui présente une ouverture (14) propre à un passage de câble, et une portion d'engagement (15), qui s'étend annulairement autour de l'axe (A) de l'ouverture (14) de l'embase (13), cette portion d'engagement (15) présentant une paroi extérieure (16), qui s'étend vers l'avant, et par laquelle elle se raccorde à l'embase (13), et une paroi intérieure (18), qui, en rebroussement vers l'arrière par rapport à la paroi extérieure (16), se raccorde en U à celle-ci, **caractérisé en ce que**, conjointement, la portion d'engagement (15) est fractionnée circulairement en mors (19, 19') élastiquement déformables par des fentes (26) qui s'étendent jusqu'à l'embase (13), **en ce que**, à leur raccordement à l'embase (13), les mors (19, 19') s'encastrent chacun dans celle-ci suivant une zone d'enracinement (Z) tangente à une circonférence (C) centrée sur l'axe de l'ouverture (14) de l'embase (13), et **en ce que**, à cette portion d'engagement (15), qui est en matériau relativement rigide, il est associé un organe d'étanchéité (20), qui s'étend globalement transversalement par rapport à l'axe (A) de l'ouverture (14) de l'embase (13), en occultant au moins partiellement cette ouverture (14), et qui est, lui, en matériau relativement souple.

2. Dispositif d'entrée de câble suivant la revendication 1, **caractérisé en ce que** la paroi intérieure (18) de la portion d'engagement (15) comporte au moins un mors (19) d'un premier type, dit mors (19) long, dont l'extrémité enveloppe au repos un passage (P) relativement étroit, et au moins un mors (19') d'un deuxième type, dit mors (19') court, dont l'extrémité enveloppe au repos un passage (P') relativement large.

3. Dispositif d'entrée de câble suivant la revendication 2, **caractérisé en ce que** la paroi intérieure (18) de la portion d'engagement (15) comporte en alternance des mors (19) longs et des mors (19') courts.

4. Dispositif d'entrée de câble suivant l'une quelconque des revendications 1 à 3, **caractérisé en ce que** les mors (19, 19') que forme la paroi intérieure (18) de la portion d'engagement (15) présentent, transversalement, en saillie sur leur surface extérieure, en direction de l'axe (A) de l'ouverture (14) de l'embase (13), au moins un cran (28).

5. Dispositif d'entrée de câble suivant l'une quelconque des revendications 1 à 4, **caractérisé en ce que** les mors (19, 19') que forme la paroi intérieure (18) de la portion d'engagement (15) ont, en plan, un contour triangulaire.

6. Dispositif d'entrée de câble suivant l'une quelconque des revendications 1 à 5, **caractérisé en ce que**, au niveau de l'embase (13), les fentes (26) séparant les mors (19, 19') ont une largeur (L1) supérieure au tiers de la largeur (L2) de ces mors (19, 19') à ce même niveau.

7. Dispositif d'entrée de câble suivant l'une quelconque des revendications 1 à 6, **caractérisé en ce que** l'organe d'étanchéité (20) est en matière élastiquement déformable.

8. Dispositif d'entrée de câble suivant l'une quelconque des revendications 1 à 7, **caractérisé en ce que** l'organe d'étanchéité (20) est continu.

9. Dispositif d'entrée de câble suivant l'une quelconque des revendications 1 à 8, **caractérisé en ce que** l'organe d'étanchéité (20) s'étend en arrière de la portion d'engagement (15).

10. Dispositif d'entrée de câble suivant la revendication 9, **caractérisé en ce qu'**il comporte une pièce arrière (22), qui, solidaire de l'embase (13), est distincte de celle-ci et comporte une ouverture (23) coaxiale de l'ouverture (14) de cette embase (13).

11. Dispositif d'entrée de câble suivant la revendication 10, **caractérisé en ce que** la pièce arrière (22) comporte un voile (31), qui occulte au moins partiellement son ouverture (23), et qui est fragmenté circulairement en mors (32) élastiquement déformables.

12. Dispositif d'entrée de câble suivant l'une quelconque des revendications 10, 11, **caractérisé en ce que** l'organe d'étanchéité (20) intervient au moins pour partie entre la portion d'engagement (15) et la pièce arrière (22).

13. Dispositif d'entrée de câble suivant l'une quelconque des revendications 10 à 12, **caractérisé en ce que** l'embase (13) comporte une platine (21), la pièce arrière (22) forme une contre-plaque qui s'étend sensiblement parallèlement à cette platine (21), et l'organe d'étanchéité (20) intervient entre cette platine (21) et la contre-plaque que forme la pièce arrière (22).

14. Dispositif d'entrée de câble suivant la revendication 13, **caractérisé en ce que** le voile (31) de la pièce arrière (22) a une épaisseur inférieure à celle de la contre-plaque que la pièce arrière (22) forme autour de lui.

15. Dispositif d'entrée de câble suivant l'une quelconque des revendications 13, 14, **caractérisé en ce que** l'organe d'étanchéité (20) appartient à une plaque (30) prise en sandwich entre la platine (21) de l'embase (13) et la pièce arrière (22).

16. Dispositif d'entré de câble suivant la revendication 15, **caractérisé en ce que** l'épaisseur (E) de la plaque (30) à laquelle appartient l'organe d'étanchéité (20) est un multiple (n) de celle (e) de la platine (21) de l'embase (13).

17. Dispositif d'entrée de câble suivant l'une quelconque des revendications 15, 16, **caractérisé en ce que** la plaque (30) à laquelle appartient l'organe d'étanchéité (20) est en caoutchouc mousse.

18. Dispositif d'entrée de câble suivant l'une quelconque des revendications 1 à 17, **caractérisé en ce que** l'organe d'étanchéité (20) occulte entièrement l'ouverture (14) de l'embase (13).

19. Dispositif d'entrée de câble suivant l'une quelconque des revendications 1 à 18, **caractérisé en ce que**, au raccordement de la paroi extérieure (16) de la portion d'engagement (15) avec l'embase (13), s'étend une collerette (27).

20. Dispositif d'entrée de câble suivant l'une quelconque des revendications 10 à 12, **caractérisé en ce que** l'organe d'étanchéité (20) est surmoulé à une partie au moins de la pièce arrière (22).

21. Dispositif d'entrée de câble suivant les revendications 11 et 20, prises conjointement, **caractérisé en ce que** l'organe d'étanchéité (20) est surmoulé au voile (31) de la pièce arrière (22).

22. Dispositif d'entrée de câble suivant la revendication 21, **caractérisé en ce que** l'organe d'étanchéité (20) s'étend de part et d'autre du voile (31) de la pièce arrière (22), en enrobant totalement les mors (32) de ce voile (31).

23. Dispositif d'entrée de câble suivant la revendication 21, **caractérisé en ce que** l'organe d'étanchéité (20) ne s'étend que sur la face avant de la pièce arrière (22).

24. Dispositif d'entrée de câble suivant la revendication 21, **caractérisé en ce que** l'organe d'étanchéité (20) ne s'étend que sur la face arrière de la pièce arrière (22).

25. Dispositif d'entrée de câble suivant l'une quelconque des revendications 20 à 24, **caractérisé en ce que** l'embase (13) se réduit à une virole (48), et la pièce arrière (22) comporte elle-même une virole (50) qui contrebute l'embase (13) ainsi constituée d'une telle virole (48).

26. Dispositif d'entrée de câble suivant l'une quelconque des revendications 20 à 25, **caractérisé en ce que** l'organe d'étanchéité (20) comporte une ouverture (54) coaxiale de l'ouverture (14) de l'embase (13).

27. Dispositif d'entrée de câble suivant l'une quelconque des revendications 20 à 26, **caractérisé en ce que** le voile (31) de la pièce arrière (22) est globalement tronconique, avec sa concavité tournée vers la portion d'engagement (15), et, au-delà de l'extrémité libre des mors (32) de ce voile (31), l'organe d'étanchéité (20) forme un tube (55) qui s'étend axialement en direction opposée à la portion d'engagement (15).

28. Dispositif d'entrée de câble suivant la revendication 27, **caractérisé en ce que** le tube (55) que forme l'organe d'étanchéité (20) est tronconique, avec une conicité inférieure à celle du voile (31) de la pièce arrière (22).

29. Dispositif d'entrée de câble suivant l'une quelconque des revendications 20 à 28, **caractérisé en ce que** l'organe d'étanchéité (20) est en élastomère.

30. Dispositif d'entrée de câble suivant l'une quelconque des revendications 1 à 29, **caractérisé en ce que** la portion d'engagement (15) est d'un seul tenant avec l'embase (13).

31. Dispositif d'entrée de câble suivant l'une quelconque des revendications 1 à 30, **caractérisé en ce qu'**il est associé à au moins un autre dispositif d'entrée de câble (12) de même type, en ayant en commun avec cet autre dispositif d'entrée de câble (12) une même platine (21, 21').

32. Dispositif d'entrée de câble suivant l'une quelconque des revendications 1 à 30, **caractérisé en ce qu'**il intervient isolément, à la manière d'un presse-étoupe.

33. Dispositif d'entrée de câble suivant l'une quelconque des revendications 1 à 32, **caractérisé en ce que** la portion d'engagement (15) fait au moins en partie saillie vers l'avant sur l'embase (13).

34. Dispositif d'entrée de câble suivant l'une quelconque des revendications 1 à 33, **caractérisé en ce qu'**il comporte une coiffe (40) qui recouvre sa portion d'engagement (15).

35. Dispositif d'entrée de câble suivant la revendication 34, **caractérisé en ce que** sa coiffe (40) comporte une paroi latérale (41), par laquelle elle entoure la paroi extérieure (16) de la portion d'engagement (15), et une paroi de façade (42), qui s'étend en avant de cette portion d'engagement (15), et sa paroi latérale (41), au moins, est en matériau relativement rigide, tandis que sa paroi de façade (42) comporte un opercule défonçable (44), qui s'étend sur une partie au moins de sa surface, et qui, lui, est en matériau relativement souple.

36. Dispositif d'entrée de câble suivant les revendications 10 et 34, prises conjointement, **caractérisé en ce que** la coiffe (40) est solidarisée à la pièce arrière (22), et la coiffe (40) et la pièce arrière (22) délimitent conjointement une enceinte (53) dans laquelle la portion d'engagement (15) et l'embase (31) se trouvent emprisonnées.

37. Dispositif d'entrée de câble suivant la revendication 36, **caractérisé en ce que** la coiffe (40) est solidarisée à la pièce arrière (22) par soudage ou analogue.

38. Dispositif d'entrée de câble suivant les revendications 32 et 36, prises conjointement, **caractérisé en ce que** la coiffe (40) est solidarisée par vissage à la pièce arrière (22).

39. Dispositif d'entrée de câble suivant les revendications 31 et 34, prises conjointement, **caractérisé en ce que** sa coiffe (40) est d'un seul tenant avec la platine (21') qu'il a en commun avec au moins un autre, en formant une seule et même pièce avec cette platine (21').

## Patentansprüche

1. Kabeldurchführung, umfassend einen Sockel (13), der eine Öffnung (14) für den Durchgang eines Kabels aufweist, und einen Einführungsteil (15), der sich ringförmig um die Achse (A) der Öffnung (14) des Sockels (13) herum erstreckt, wobei dieser Einführungsteil (15) eine Außenwand (16) aufweist, die sich nach vorne erstreckt und mit der er an den Sockel (13) anschließt, sowie eine Innenwand (18), die bezüglich der Außenwand (16) nach hinten zurückgebogen ist und an diese U-förmig anschließt, **dadurch gekennzeichnet, daß** der Einführungsteil (15) gleichzeitig kreisförmig in elastisch verformbare Backen (19, 19') durch Schlitze (26) unterteilt ist, die sich bis zum Sockel (13) erstrecken, daß die Backen (19, 19') an ihrem Anschluß an den Sockel (13) jeweils in diesen gemäß einer Verwurzelungszone (Z) eingelassen sind, die zu einem zur Achse der Öffnung (14) des Sockels (13) konzentrischen Kreisumfang (C) tangential ist, und daß diesem Einführungsteil (15), der aus einem relativ starren Werkstoff besteht, ein Dichtungsorgan (20) zugeordnet ist, das sich insgesamt quer zur Achse (A) der Öffnung (14) des Sockels (13) erstreckt, indem es diese Öffnung (14) mindestens teilweise abdeckt, und das seinerseits aus einem relativ biegsamen Werkstoff besteht.

2. Kabeldurchführung nach Anspruch 1, **dadurch gekennzeichnet, daß** die Innenwand (18) des Einführungsteils (15) mindestens eine Backe (19) eines ersten Typs, lange Backe (19) genannt, deren Ende im Ruhezustand einen relativ engen Durchgang (P) umhüllt, und mindestens eine Backe (19') eines anderen Typs, kurze Backe (19') genannt, aufweist, deren Ende im Ruhezustand einen relativ weiten Durchgang (P') umhüllt.

3. Kabeldurchführung nach Anspruch 2, **dadurch gekennzeichnet, daß** die Innenwand (18) des Einführungsteils (15) abwechselnd lange Backen (19) und kurze Backen (19') aufweist.

4. Kabeldurchführung nach einem der Ansprüche 1 bis 3, **dadurch gekennzeichnet, daß** die Backen (19, 19'), die die Innenwand (18) des Einführungsteils (15) bilden, in Querrichtung auf ihrer Außenseite in Richtung der Achse (A) der Öffnung (14) des Sockels (13) vorstehend mindestens eine Raste (28) aufweisen.

5. Kabeldurchführung nach einem der Ansprüche 1 bis 4, **dadurch gekennzeichnet, daß** die Backen (19, 19'), die die Innenwand (18) des Einführungsteils (15) bildet, in Draufsicht einen dreieckigen Umriß besitzen.

6. Kabeldurchführung nach einem der Ansprüche 1 bis 5, **dadurch gekennzeichnet, daß** die die Backen (19, 19') trennenden Schlitze (26) auf Höhe des Sockels (13) eine Breite (L1) besitzen, die größer als ein Drittel der Breite (L2) dieser Backen (19, 19') auf derselben Höhe ist.

7. Kabeldurchführung nach einem der Ansprüche 1 bis 6, **dadurch gekennzeichnet, daß** das Dichtungsorgan (20) aus einem elastisch verformbaren Werkstoff besteht.

8. Kabeldurchführung nach einem der Ansprüche 1 bis 7, **dadurch gekennzeichnet, daß** das Dichtungsorgan (20) kontinuierlich ist.

9. Kabeldurchführung nach einem der Ansprüche 1 bis 8, **dadurch gekennzeichnet, daß** das Dichtungsorgan (20) sich hinter dem Einführungsteil (15) erstreckt.

10. Kabeldurchführung nach Anspruch 9, **dadurch gekennzeichnet, daß** sie ein hinteres Teil (22) aufweist, das mit dem Sockel (13) fest verbunden ist und von diesem getrennt ist und eine zur Öffnung (14) des Sockels (13) koaxiale Öffnung (23) aufweist.

11. Kabeldurchführung nach Anspruch 10, **dadurch gekennzeichnet, daß** das hintere Teil (22) eine Wandung (31) aufweist, die mindestens teilweise seine Öffnung (23) abdeckt und die kreismäßig in elastisch verformbare Backen (32) unterteilt ist.

12. Kabeldurchführung nach einem der Ansprüche 10, 11, **dadurch gekennzeichnet, daß** das Dichtungsorgan (20) mindestens zum Teil zwischen dem Einführungsteil (15) und dem hinteren Teil (22) angeordnet ist.

13. Kabeldurchführung nach einem der Ansprüche 10 bis 12, **dadurch gekennzeichnet, daß** der Sockel (13) eine Platine (21) aufweist, wobei das hintere Teil (22) eine Gegenplatte bildet, die sich im wesentlichen parallel zu dieser Platine (21) erstreckt, und das Dichtungsorgan (20) zwischen dieser Platine (21) und der von dem hinteren Teil (22) gebildeten Gegenplatte angeordnet ist.

14. Kabeldurchführung nach Anspruch 13, **dadurch gekennzeichnet, daß** die Wandung (31) des hinteren Teils (22) eine Dicke besitzt, die kleiner als die der Gegenplatte ist, die das hintere Teil (22) um sie herum bildet.

15. Kabeldurchführung nach einem der Ansprüche 13, 14, **dadurch gekennzeichnet, daß** das Dichtungsorgan (20) zu einer Platte (30) gehört, die sandwichartig zwischen der Platine (21) des Sockels (13) und dem hinteren Teil (22) ergriffen ist.

16. Kabeldurchführung nach Anspruch 15, **dadurch gekennzeichnet, daß** die Dicke (E) der Platte (30), zu der das Dichtungsorgan (20) gehört, ein Vielfaches (n) von der (e) der Platine (21) des Sockels (13) ist.

17. Kabeldurchführung nach einem der Ansprüche 15, 16, **dadurch gekennzeichnet, daß** die Platte (30), zu der das Dichtungsorgan (20) gehört, aus Schaumgummi besteht.

18. Kabeldurchführung nach einem der Ansprüche 1 bis 17, **dadurch gekennzeichnet, daß** das Dichtungsorgan (20) die Öffnung (14) des Sockels (13) ganz abdeckt.

19. Kabeldurchführung nach einem der Ansprüche 1 bis 18, **dadurch gekennzeichnet, daß** sich bei dem Anschluß der Außenwand (16) des Einführungsteils (15) an den Sockel (13) ein Bund (27) erstreckt.

20. Kabeldurchführung nach einem der Ansprüche 10 bis 12, **dadurch gekennzeichnet, daß** das Dichtungsorgan (20) auf mindestens einen Teil des hinteren Teils (22) aufgeformt ist.

21. Kabeldurchführung nach den Ansprüche 11 und 20 zusammen, **dadurch gekennzeichnet, daß** das Dichtungsorgan (20) auf die Wandung (31) des hinteren Teils (22) aufgeformt ist.

22. Kabeldurchführung nach Anspruch 21, **dadurch gekennzeichnet, daß** das Dichtungsorgan (20) sich zu beiden Seiten der Wandung (31) dieses hinteren Teils (22) erstreckt, indem es die Backen (32) dieser Wandung (31) vollständig umhüllt.

23. Kabeldurchführung nach Anspruch 21, **dadurch gekennzeichnet, daß** das Dichtungsorgan (20) sich nur über die Vorderseite des hinteren Teils (22) erstreckt.

24. Kabeldurchführung nach Anspruch 21, **dadurch gekennzeichnet, daß** das Dichtungsorgan (20) sich nur über die Rückseite des hinteren Teils (22) erstreckt.

25. Kabeldurchführung nach einem der Ansprüche 20 bis 24, **dadurch gekennzeichnet, daß** der Sockel (13) sich auf einen Ring (48) reduziert und das hintere Teil (22) seinerseits einen Ring (50) aufweist, der den auf diese Weise aus einem solchen Ring (48) gebildeten Sockel (13) abstützt.

26. Kabeldurchführung nach einem der Ansprüche 20 bis 25, **dadurch gekennzeichnet, daß** das Dichtungsorgan (20) eine zur Öffnung (14) des Sockels (13) koaxiale Öffnung (54) aufweist.

27. Kabeldurchführung nach einem der Ansprüche 20 bis 26, **dadurch gekennzeichnet, daß** die Wandung (31) des hinteren Teils (22) insgesamt kegelstumpfförmig ist, wobei ihre Konkavität dem Einführungsteil (15) zugewandt ist, und das Dichtungsorgan (20) jenseits des freien Endes der Backen (32) der Wandung (31) ein Rohr (55) bildet, das sich axial in einer dem Einführungsteil (15) entgegengesetzten Richtung erstreckt.

28. Kabeldurchführung nach Anspruch 27, **dadurch gekennzeichnet, daß** das Rohr (55), das das Dichtungsorgan (20) bildet, kegelstumpfförmig ist, und zwar mit einer Konizität, die kleiner als die der Wandung (31) des hinteren Teils (22) ist.

29. Kabeldurchführung nach einem der Ansprüche 20 bis 28, **dadurch gekennzeichnet, daß** das Dichtungsorgan (20) aus Elastomer besteht.

30. Kabeldurchführung nach einem der Ansprüche 1 bis 29, **dadurch gekennzeichnet, daß** der Einführungsteil (15) mit dem Sockel (13) einstückig ausgeführt ist.

31. Kabeldurchführung nach einem der Ansprüche 1 bis 30, **dadurch gekennzeichnet, daß** sie mindestens einer anderen Kabeldurchführung (12) desselben Typs zugeordnet ist, wobei sie mit dieser anderen Kabeldurchführung (12) eine Platine (21, 21') gemeinsam hat.

32. Kabeldurchführung nach einem der Ansprüche 1 bis 30, **dadurch gekennzeichnet, daß** sie nach der Art einer Stopfbuchse allein vorgesehen ist.

33. Kabeldurchführung nach einem der Ansprüche 1 bis 32, **dadurch gekennzeichnet, daß** der Einführungsteil (15) mindestens teilweise an dem Sockel (13) nach vorne vorsteht.

34. Kabeldurchführung nach einem der Ansprüche 1 bis 33, **dadurch gekennzeichnet, daß** sie eine Kappe (40) aufweist, die ihren Einführungsteil (15) abdeckt.

35. Kabeldurchführung nach Anspruch 34, **dadurch gekennzeichnet, daß** ihre Kappe (40) eine Seitenwand (41), mit der sie die Außenwand (16) des Einführungsteils (15) umgibt, und eine Frontwand (42) aufweist, die sich vor diesem Einführungsteil (15) erstreckt, und mindestens ihre Seitenwand (41) aus einem relativ starren Werkstoff besteht, während ihre Frontwand (42) einen eindrückbaren Deckel (44) aufweist, der sich über mindestens einen Teil ihrer Oberfläche erstreckt und der aus einem relativ biegsamen Werkstoff besteht.

36. Kabeldurchführung nach den Ansprüchen 10 und 34 zusammen, **dadurch gekennzeichnet, daß** die Kappe (40) mit dem hinteren Teil (22) fest verbunden ist und die Kappe (40) und das hintere Teil (22) zusammen eine Kammer (53) abgrenzen, in der der Einführungsteil (15) und der Sockel (31) eingeschlossen sind.

37. Kabeldurchführung nach Anspruch 36, **dadurch gekennzeichnet, daß** die Kappe (40) mit dem hinteren Teil (22) durch Verschweißen oder dergleichen fest verbunden ist.

38. Kabeldurchführung nach den Ansprüchen 32 und 36 zusammen, **dadurch gekennzeichnet, daß** die Kappe (40) mit dem hinteren Teil (22) durch Verschraubung fest verbunden ist.

39. Kabeldurchführung nach den Ansprüche 31 und 34 zusammen, **dadurch gekennzeichnet, daß** ihre Kappe (40) mit der Platine (21') einstückig ausgeführt ist, die sie mit mindestens einer anderen gemeinsam hat, indem sie mit dieser Platine (21') ein und dasselbe Teil bildet.

## Claims

1. Cable inlet device of the type comprising a base (13), which has an opening (14) suitable for passing a cable through, and an engagement portion (15), which extends in an annular manner around the axis (A) of the opening (14) of the base (13), this engagement portion (15) having an outside wall (16), which extends forwards, and by which it is connected to the base (13), and an inside wall (18) which, turning back towards the rear with respect to the outside wall (16), is connected in a U-shape manner to the latter, **characterized in that**, in conjunction, the engagement portion (15) is divided up circularly into jaws (19, 19') that are elastically deformable due to slots (26) which extend as far as the base (13), and **in that**, where they connect with the base (13), the jaws (19, 19') are each rooted in the latter in a rooting zone (Z) that is tangential to a circumference (C) centred on the axis of the opening (14) of the base (13), and **in that**, with this engagement portion (15), which is made of relatively rigid material, there is associated a sealing component (20), which extends globally in a transverse manner with respect to the axis (A) of the opening (14) of the base (13), at least partially covering that opening (14) and which itself is made of relatively flexible material.

2. Cable inlet device according to claim 1, **characterized in that** the inside wall (18) of the engagement portion (15) comprises at least one jaw (19) of a first type, called a long jaw (19) whose end surrounds, in the rest position, a relatively narrow passage (P), and at least one jaw (19') of a second type, called a short jaw, whose end surrounds, in the rest position, a relatively wide passage (P').

3. Cable inlet device according to claim 2, **characterized in that** the inside wall (18) of the engagement portion (15) comprises alternating long jaws (19) and short jaws (19').

4. Cable inlet device according to any one of claims 1 to 3, **characterized in that** the jaws (19, 19') formed by the inside wall (18) of the engagement portion (15) have, protruding transversely on their outside surface, towards the axis (A) of the opening (14) of the base (13), at least one catch (28).

5. Cable inlet device according to any one of claims 1 to 4, **characterized in that** the jaws (19, 19') formed by the inside wall (18) of the engagement portion (15) have, in plan view, a triangular profile.

6. Cable inlet device according to any one of claims 1 to 5, **characterized in that**, at the level of the base (13), the slots (26) separating the jaws (19, 19') have a width (L1) greater than one third of the width (L2) of these jaws (19, 19') at that same level.

7. Cable inlet device according to any one of claims 1 to 6, **characterized in that** the sealing component (20) is made of elastically deformable material.

8. Cable inlet device according to any one of claims 1 to 7, **characterized in that** the sealing component (20) is continuous.

9. Cable inlet device according to any one of claims 1 to 8, **characterized in that** the sealing component (20) extends behind the engagement portion (15).

10. Cable inlet device according to claim 9, **characterized in that** it comprises a rear part (22) which, though firmly connected to the base (13), is distinct from the latter and comprises an opening (23) that is coaxial with the opening (14) of that base (13).

11. Cable inlet device according to claim 10, **characterized in that** the rear part (22) comprises a shroud (31) that at least partially covers its opening (23) and which is fragmented in a circular manner into elastically deformable jaws (32).

12. Cable inlet device according to either one of claims 10 and 11, **characterized in that** the sealing component (20) is at least partly positioned between the engagement portion (15) and the rear part (22).

13. Cable inlet device according to any one of claims 10 to 12,**characterized in that** the base (13) comprises a panel (21), the rear part (22) forms a counter-plate which extends substantially parallel to this plate (21) and the sealing component (20) is positioned between this panel (21) and the counter-plate formed by the rear part (22).

14. Cable inlet device according to claim 13, **characterized in that** the shroud (31) of the rear part (22) has a thickness less than that of the counter-plate formed by the rear part (22) around it.

15. Cable inlet device according to either one of claims 13 and 14, **characterized in that** the sealing component (20) is part of a plate (30) sandwiched between the panel (21) of the base (13) and the rear part (22).

16. Cable inlet device according to claim 15, **characterized in that** the thickness (E) of the plate (30), of which the sealing component (20) is a part, is a multiple (n) of that (e) of the panel (21) of the base (13).

17. Cable inlet device according to either one of claims 15 and 16, **characterized in that** the plate (30), of which the sealing component (20) is a part, is made of foam rubber.

18. Cable inlet device according to any one of claims 1 to 17, **characterized in that** the sealing component (20) fully covers the opening (14) of the base (13).

19. Cable inlet device according to any one of claims 1 to 18, **characterized in that** a collar (27) extends at the connection between the outside wall (16) of the engagement portion (15) and the base (13).

20. Cable inlet device according to any one of claims 10 to 12, **characterized in that** the sealing component (20) is moulded over at least a part of the rear part (22).

21. Cable inlet device according to claims 11 and 20 considered jointly, **characterized in that** the sealing component (20) is moulded over the shroud (31) of the rear part (22).

22. Cable inlet device according to claim 21, **characterized in that** the sealing component (20) extends on both sides of the shroud (31) of the rear part (22), totally cladding the jaws (32) of that shroud (31).

23. Cable inlet device according to claim 21, **characterized in that** the sealing component (20) extends only over the front face of the rear part (22).

24. Cable inlet device according to claim 21, **characterized in that** the sealing component (20) extends only over the rear face of the rear part (22).

25. Cable inlet device according to any one of claims 20 to 24, **characterized in that** the base (13) is reduced to a hoop (48), and the rear part (22) itself comprises a hoop (50) which butts against the base (13) thus formed by such a hoop (48).

26. Cable inlet device according to any one of claims 20 to 25, **characterized in that** the sealing component (20) comprises an opening (54) that is coaxial with the opening (14) of the base (13).

27. Cable inlet device according to any one of claims 20 to 26, **characterized in that** the shroud (31) of the rear part (22) is globally truncated-cone shaped, with its concavity facing the engagement position (15) and, beyond the free end of the jaws (32) of this shroud (31), the sealing component (20) forms a tube (55) which extends axially in the direction away from the engagement portion (15).

28. Cable inlet device according to claim 27, **characterized in that** the tube (55) that the sealing component (20) forms is truncated-cone shaped, with a conicity less than that of the shroud (31) of the rear part (22).

29. Cable inlet device according to any one of claims 20 to 28, **characterized in that** the sealing component (20) is made of elastomer.

30. Cable inlet device according to any one of claims 1 to 29, **characterized in that** the engagement portion (15) is formed in one piece with the base (13).

31. Cable inlet device according to any one of claims 1 to 30, **characterized in that** it is associated with at least one other cable inlet device (12) of the same type, having a same panel (21, 21') in common with this other cable inlet device (12).

32. Cable inlet device according to any one of claims 1 to 30, **characterized in that** it is used separately, like a stuffing box.

33. Cable inlet device according to any one of claims 1 to 32, **characterized in that** the engagement portion (15) at least partly protrudes forward from the base (13).

34. Cable inlet device according to any one of claims 1 to 33, **characterized in that** it comprises a cap (40) which covers its engagement portion (15).

35. Cable inlet device according to claim 34, **characterized in that** its cap (40) comprises a lateral wall (41) by which it surrounds the outside wall (16) of the engagement portion (15), and a façade wall (42), which extends forwards from this engagement portion (15), and at least its lateral wall (41) is made from a relatively rigid polymer material, whilst its facade wall (42) comprises a breakable cover (44) which extends over at least a part of its surface and which is itself made of a relatively flexible material.

36. Cable inlet device according to claims 10 and 34, considered jointly, **characterized in that** the cap (40) is integral with the rear part (22) and the cap (40) and the rear part (22) together delimit an enclosure (53) in which the engagement portion (15) and the base (31) are contained.

37. Cable inlet device according to claim 36, **characterized in that** the cap (40) is firmly connected to the rear part (22) by welding or similar.

38. Cable inlet device according to claims 32 and 36, considered jointly, **characterized in that** the cap (40) is firmly connected to the rear part (22) by screwing.

39. Cable inlet device according to claims 31 and 34, considered jointly, **characterized in that** its cap (40) is in one piece with the panel (21') that it has in common with at least one other, forming a single part with this panel (21').
